# EUROPEAN PATENT SPECIFICATION

(11) **EP 4 140 779 B1**
(45) Date of publication and mention of the grant of the patent: **13.03.2024**
(21) Application number: 22177996.0
(22) Date of filing: 09.06.2022
(51) Int. Cl.: B60C 13/00

(54) **PNEUMATIC TIRE**
LUFTREIFEN
PNEUMATIQUE

(30) Priority: 27.08.2021 JP 2021139163
(43) Date of publication of application: 01.03.2023
(73) Proprietor: Toyo Tire Corporation, Itami-shi, Hyogo 664-0847 (JP)
(72) Inventor: KAMADA, Nobuyuki, Itami-shi, Hyogo, 664-0847 (JP)
(74) Representative: Ricker, Mathias

(56) References cited:
- EP-A1- 3 010 729
- JP-A- 2021 054 300
- JP-B2- 3 708 868
- JP-U- S58 180 706
- US-A1- 2021 039 448

## Description

### BACKGROUND OF THE INVENTION

### 1. Field of the Invention

An embodiment of the present invention relates to a pneumatic tire.

### 2. Description of the Related Art

There has been known a pneumatic tire provided with serrations formed of a plurality of ridges with a small width on a surface of a sidewall as a pattern, thereby making contrast of a dark part and a light part due to reflection of light between a portion where the pattern is provided and a portion where the pattern is not provided.

For example, JP 2017-132296 A discloses a structure in which a pattern part formed of ridges whose ridge lines have curved parts in a planar view are arranged in a nested structure having a central point is provided on a tire surface.

The JP 2021/054300 A discloses that a pneumatic tire comprises on a tire side part a serration region; and an emblem. The serration region comprises a plurality of strip grooves which becomes dent from a profile surface of the tire side part; and ridges formed between the adjacent strip grooves. The emblem includes a recess which becomes dent from the profile surface. A groove depth of the strip groove from the profile surface becomes smaller toward outside of a tire radial direction. A depth of the recess from the profile surface is smaller than a groove depth of the strip groove.

The US 2021/039448 A1 discloses that a surface of a sidewall portion of a pneumatic tire includes a ridge pattern region provided with a plurality of ridges extending continuously in one direction at an interval, a smooth surface region composed of a smooth surface, and a two-dimensional code having a rectangular shape in which a dot pattern is formed of two kinds of gray scale elements that are formed distinguishable from each other by unevenness of a surface. The two-dimensional code is provided in the smooth surface region, and a shortest distance at a position where a distance from the ridge pattern region to the two-dimensional code is the shortest distance among four sides of the rectangular shape of the two-dimensional code is from 3 to 25 % of a length of one side, of the two-dimensional code, the one side having the position where the distance of the two-dimensional code is the shortest distance.

The JP 3 708 868 B2 discloses that thin grooves are formed in a row on the surface of the side wall of a tire to form a decorative part comprising serrations formed with ridges rising up between each thin groove. In the decorative part, display grooves, whose depth is different from the depth ha of the thin grooves, are formed in the part of thin grooves that shapes the emblem or covers the outline of it, so that an emblem display part is formed.

The WO 2014/202731 A1 discloses a tire made from a rubber material comprising a flank and a marking protruding from that flank. The tire comprises a texture. The texture comprises a plurality of strands protruding from the flank, said strands being distributed at a density at least equal to five strands per square millimeter, each strand having a mean section comprised between 0.0007 mm² and 0.06 mm² and/or said texture comprising a plurality of strips substantially parallel to each other and protruding from the flank, the pitch of the strips being at least equal to 0.5 mm, each strip having a mean width comprised between 0.03 mm and 0.3 mm. The texture protrudes from the flank of the tire, said texture surrounding all or part of the marking.

The JP S58 180 706 U discloses that in a tire having the indication of letters, symbols or the like in the side portion, the indication is expressed in such a manner that a convex ridge having roundness from the top portion to the side portion and a concave groove having a roundness from the bottom portion to the side surface are arranged alternately in parallel and that the surface of the tire is formed by the uneven surface.

### SUMMARY OF THE INVENTION

The pattern is formed of a plurality of ridges in related art as described above. In such case, a difference occurs in a rubber amount between the portion where the pattern is provided and the portion where the pattern is not provided, which may generate light spot (namely, hollow or underfill) in ridges at the time of molding.

In view of the above, an object of the present invention is to provide a pneumatic tire which can suppress occurrence of light spot.

According to an aspect of the present invention, there is provided a pneumatic tire including a pattern in a pattern forming area provided on a surface of a sidewall, in which the pattern includes ridges protruding from a reference surface in the pattern forming area, grooves recessed from the reference surface, and flat surfaces interposed between adjacent ridges and grooves and extending along the reference surface, wherein the ridges and the grooves are arranged in a nested structure having a common central point.

The pneumatic tire according to the embodiment of the present invention is configured by including not only ridges but ridges and grooves. Accordingly, the rubber amount can be equalized between a portion where the pattern is provided and a portion where the pattern is not provided, which can suppress occurrence of light spot at the time of molding.

### BRIEF DESCRIPTION OF THE DRAWINGS

Fig. 1 is a half cross-sectional view of a pneumatic tire according to a first embodiment;
Fig. 2 is a side view of the pneumatic tire according to the first embodiment;
Fig. 3 is a partial side view showing a pattern forming area of the first embodiment in an enlarged manner;
Fig. 4 is an enlarged view of a pattern provided in the pattern forming area of Fig. 3;
Fig. 5 is a cross-sectional view taken along V-V line of Fig. 4, showing a cross-sectional view of the pattern;
Fig. 6 is a cross-sectional view showing a cross-sectional shape of a pattern according to a second embodiment;
Fig. 7 is a partial side view showing a pattern forming area according to a third embodiment in an enlarged manner;
Fig. 8 is a partial side view showing a pattern forming area according to a fourth embodiment in an enlarged manner;
Fig. 9 is a cross-sectional view showing a first modification example of ridges and grooves which constitute a pattern;
Fig. 10 is a cross-sectional view showing a second modification example of ridges and grooves which constitute a pattern;
Fig. 11 is a cross-sectional view showing a third modification example of ridges and grooves which constitute a pattern;
Fig. 12 is a cross-sectional view showing a fourth modification example of ridges and grooves which constitute a pattern; and
Fig. 13 is a cross-sectional view showing a fifth modification example of ridges and grooves which constitute a pattern.

### DESCRIPTION OF EMBODIMENTS

Hereinafter, embodiments of the present invention will be explained with reference to the drawings.

### [First Embodiment]

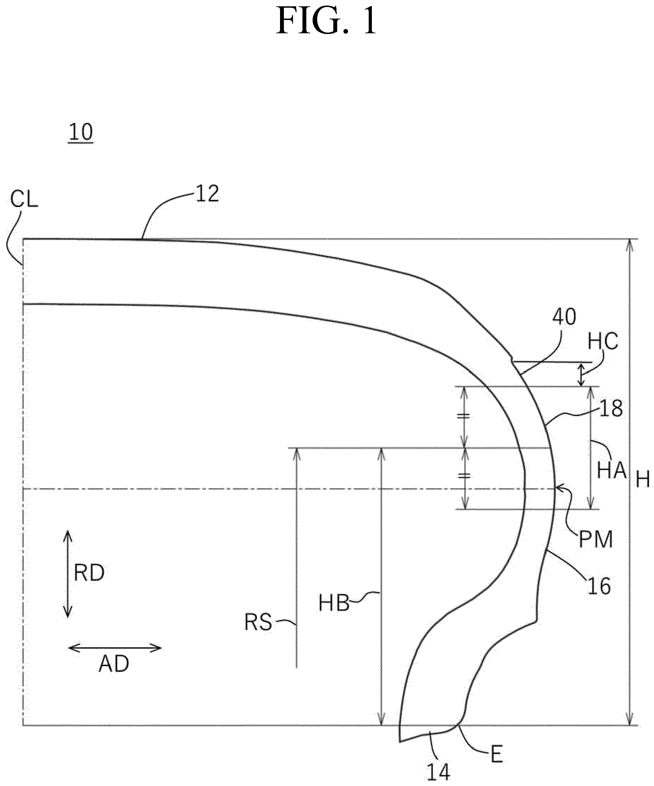

Fig. 1 to Fig. 5 are views showing a pneumatic tire 10 according to a first embodiment. The pneumatic tire 10 includes a tread 12 forming a grounding surface, a right and left pair of bead parts 14 configured to be fixed to a rim, a right and left pair of sidewalls 16 interposed between the tread 12 and the bead parts 14. Fig. 1 is a half cross-sectional view of the pneumatic tire 10 obtained by cutting the pneumatic tire 10 at a meridian cross section including a tire rotation axis.

In the drawings, a symbol CL denotes a tire equatorial plane corresponding to the center in a tire axial direction. The tire axial direction is referred to also as a tire width direction, which is a direction parallel to the tire rotation axis and denoted by a symbol AD in the drawings. A tire radial direction is a direction perpendicular to the tire rotation axis, which is denoted by a symbol RD in the drawings. A tire circumferential direction is a direction in which the tire rotates about the tire rotation axis, which is denoted by a symbol CD in the drawings.

An internal structure of the pneumatic tire 10 is not particularly limited and a well-known structure can be adopted. The pneumatic tire generally includes, as the internal structure, a right and left pair of bead cores, a carcass ply hung across the pair of bead cores in a toroidal shape, and a belt arranged on an outer circumference of a crown part of the carcass ply. Such internal structure can be adopted.

A pattern forming area 18 is provided on a surface (namely, an outer surface) of at least one sidewall 16. The surface of the sidewall 16 is a side surface of the tire which is positioned on an outer side of the surface of the tread 12 in the tire axial direction AD, which can be seen in the tire axial direction AD when the pneumatic tire 10 is mounted to the rim. The surface of the sidewall 16 is formed by vulcanizing a sidewall rubber to be molded.

The pattern forming area 18 is provided at a part of the surface of the sidewall 16 in the tire radial direction RD in a tire cross-sectional shape shown in Fig. 1. A dimension of the pattern forming area 18 in the tire radial direction RD (hereinafter, referred to as a "height HA") is not particularly limited, but preferably 0.05 times to 0.6 times of a tire cross-sectional height H, and more preferably 0.1 to 0.35 times thereof. Here, the tire cross-sectional height H indicates a vertical height from a bead heel E to a tire maximum diameter point (distance in the tire radial direction RD), which is 1/2 of a difference between a tire outer diameter and a rim diameter.

A position of the pattern forming area 18 is not particularly limited, but a base semi diameter height HB is preferably 0.45 to 0.65 times of the tire cross-sectional height H. Here, the base semidiameter height HB indicates a vertical height from an intermediate position where the height HA is divided into two to the bead heel E. A distance from the tire rotation axis to the intermediate position where the height HA is divided into two is referred to as a base semidiameter RS. In the example shown in Fig. 1, the pattern forming area 18 is provided at a position including a tire maximum width position PM. Here, the tire maximum width position PM indicates a position where a profile line of the tire surface in the sidewall 16 is the farthest from the tire equatorial plane CL in the tire axial direction AD, which is the position in the tire radial direction RD.

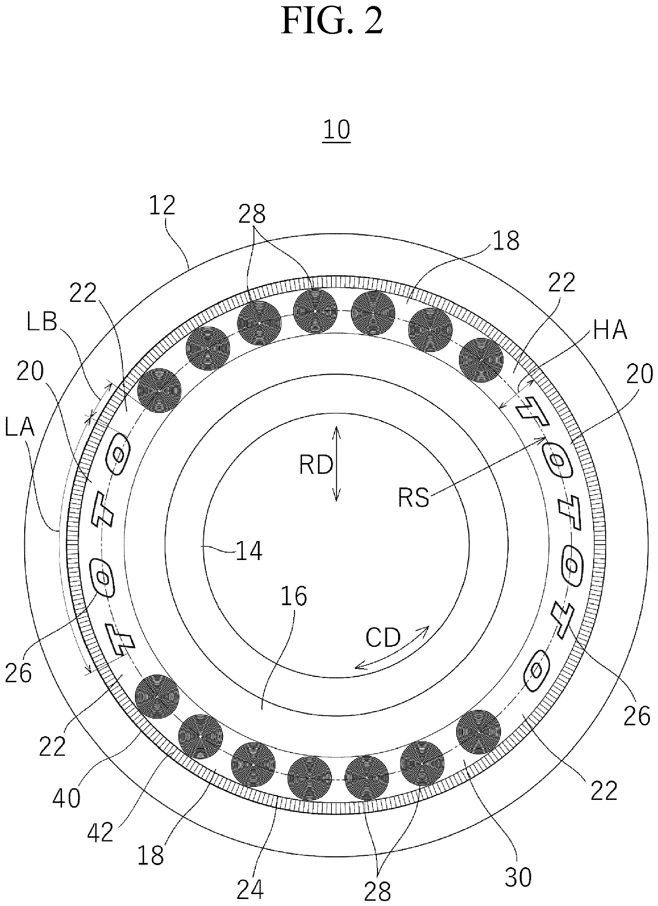

The pattern forming area 18 may be formed over the entire circumference in the tire circumferential direction CD; however, the pattern forming area 18 is formed at part in the tire circumferential direction CD as shown in Fig. 2 in this example. Specifically, a plurality of (two in this case) pattern forming areas 18, 18 having a curved band-shape are provided at intervals in the tire circumferential direction CD. Marking areas 20, 20 are provided to be interposed between the plural pattern forming areas 18, 18, and flat areas 22 are provided between the pattern forming areas 18 and the marking areas 20. These pattern forming areas 18, the marking areas 20, and the flat areas 22 form an annular decorative area 24 extending in the entire circumference in the tire circumferential direction CD.

The marking area 20 is an area where a marking 26 is formed. The marking 26 is formed of letters (including numbers), a symbol, a figure, a combination of them, or the like, indicating various information such as a manufacturer, a brand, a type, and a size of the tire. The marking 26 may either protrude or be recessed, or may be provided in a recessed shape inside a protruding edged part, which is not particularly limited. In the example shown in Fig. 2, the markings 26 which are "TOTO" and "TOTOTO" are provided in the marking areas 20.

The flat area 22 is an area formed of a flat surface where the marking 26 or a later-described pattern 28 is not provided. A length LB of the flat area 22 in the tire circumferential direction CD (namely, a length at a position of the base semidiameter RS) is not particularly limited, but preferably 3 mm or more. The length LB is preferably 0.6 times or less of a length LA of the marking area 20 in the tire circumferential direction CD (namely, a length at the position of the base semidiameter RS). As the length LB is 0.6 times or less of the length LA, the length of the pattern forming area 18 in the tire circumferential direction CD can be secured to thereby increase decorative effects.

As shown in Fig. 2, a plurality of patterns 28 are provided in the pattern forming area 18 at intervals in the tire circumferential direction CD. In this example, the patterns 28 are provided so as to fill and decorate spaces between the marking areas 20, 20 provided at intervals in the tire circumferential direction CD. Accordingly, the pattern forming area 18 can be regarded as a decorative area for filling the space between the marking areas 20, 20. In the example shown in Fig. 2, all plural patterns 28 have the same shape in planar view; however, the patterns 28 may have shapes different from one another.

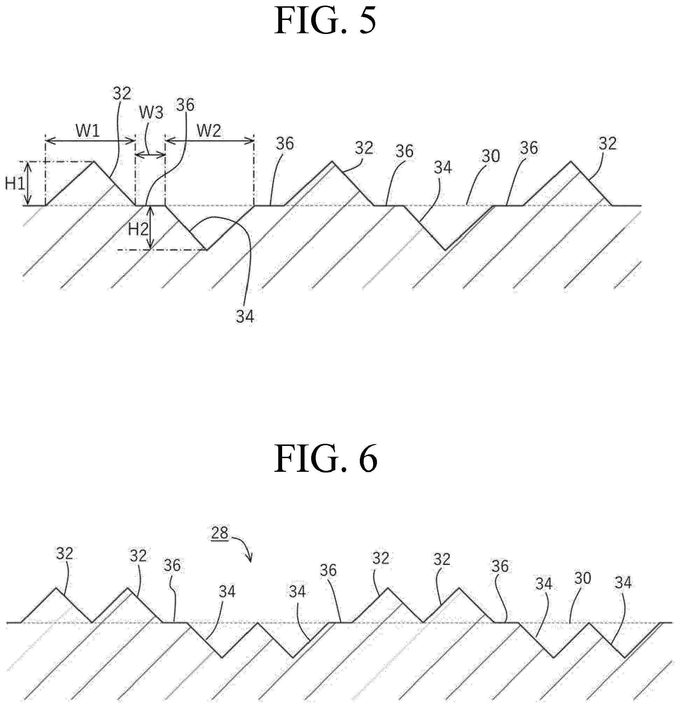

As shown in Fig. 5, the pattern 28 is formed by including a plurality of ridges 32 protruding from a reference surface 30 of the pattern forming area 18, a plurality of grooves 34 recessed from the reference surface 30, and flat surfaces 36 interposed between the ridges 32 and the grooves 34 adjacent to each other. Specifically, the plural ridges 32 and the plural grooves 34 are provided adjacent to each other through the flat surfaces 36.

The reference surface 30 is a surface to be a reference in the pattern forming area 18, and the ridges 32 and the grooves 34 are provided on the reference surface 30. The reference surface 30 may be a curved surface extending along the profile line of the tire surface in the sidewall 16 as shown in Fig. 1, or may be a curved surface or a flat surface in which the entire pattern forming area 18 is recessed from the profile line in a concave shape. If the reference surface 30 is the curved surface, a curvature thereof is small. Therefore, the reference surface 30 is a flat surface as compared with unevenness formed of the ridges 32 and the grooves 34.

The ridges 32 are raised portions extending in thin streaks. The ridges 32 are formed in a triangular shape in cross section as shown in Fig. 5 in this example. A width W1 of the ridge 32 is not particularly limited, and may be, for example, 0.1 to 1 mm. Here, the width W1 of the ridge 32 is the maximum dimension in a width direction of the cross-sectional shape of the ridges 32, which is normally a width at a root part of the ridge 32. A height H1 of the ridge 32 (namely, a distance from the reference surface 30 to an apex) is not particularly limited, but preferably 0.1 to 0.8 mm, and more preferably 0. 1 to 0.4 mm from a viewpoint of designability and securing a rubber amount therefor.

The grooves 34 are recessed portions extending in thin streaks, which are also called thin grooves. The grooves 34 is formed in a triangular shape in cross section in this example. A width W2 of the groove 34 is not particularly limited, and may be, for example, 0.1 to 1 mm. Here, the width W2 of the groove 34 is the maximum dimension in a width direction of the cross-sectional shape of the grooves 34, which is normally a width at an opening surface of the groove 34. A depth H2 of the groove 34 (namely, a distance from the reference surface 30 to a bottom) is not particularly limited, but preferably 0.1 to 0.8 mm, and more preferably 0. 1 to 0.4 mm from a viewpoint of designability.

The ridges 32 and the grooves 34 can be formed on the tire surface at the time of vulcanization molding, for example, by providing ridges and grooves in a mold used at the time of vulcanization molding of the tire by machine processing or laser processing.

The width W1 of the ridges 32 and the width W2 of the grooves 34 may be the same and may differ from each other. The width W1 is preferably 0.6 to 1.5 times of the width W2, and more preferably 0.8 to 1.2 times of the width W2 from a viewpoint of equalization in the rubber amount. The height H1 of the ridges 32 and the depth H2 of the grooves 34 may be the same and may differ from each other. The height H1 is preferably 0.6 to 1.2 times of the depth H2, and more preferably 0.8 to 1.0 times of the depth H2 from the viewpoint of equalization in the rubber amount.

The ridge 32 and the groove 34 are provided side by side with the flat surface 36 interposed therebetween. The flat surfaces 36 are surfaces extending along the reference surface 30, namely, even surfaces corresponding to the reference surface 30. The flat surface 36 is interposed between the ridge 32 and the groove 34, which is a thin band-shaped surface extending along the ridge 32 and the groove 34. A width W3 of the flat surfaces 36 is not particularly limited, and preferably, for example, 0.1 to 2 mm, more preferably 0.2 to 1.5 mm.

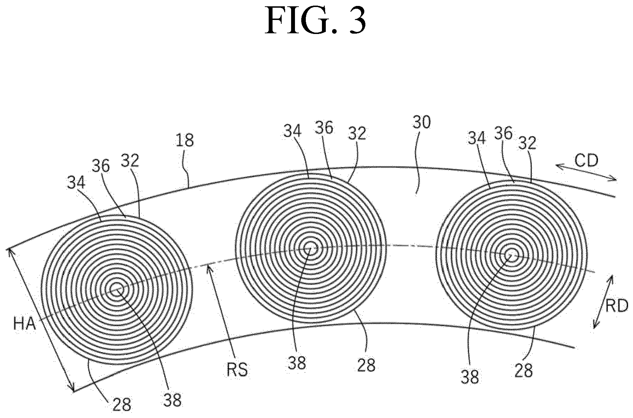

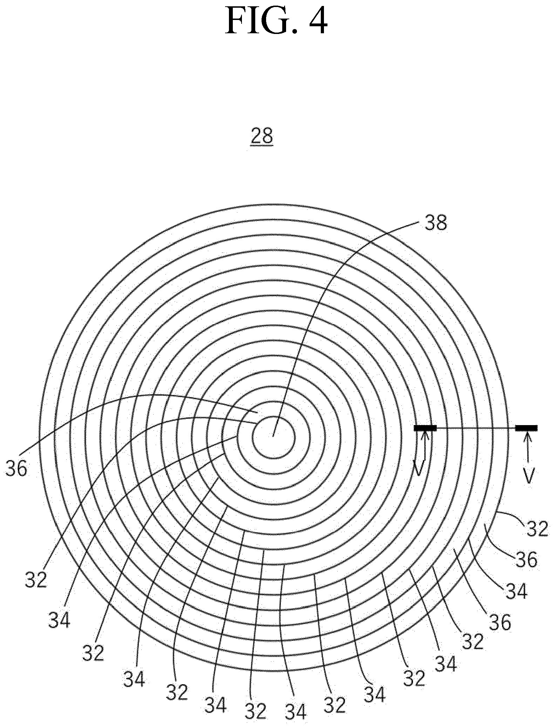

As shown in Fig. 3 and Fig. 4, the ridges 32 and the grooves 34 are arranged in a nested structure having a common central point 38 in planar view in each pattern 28. The planar view means viewing of the pattern 28 in a planar manner. Fig. 3 and Fig. 4 are views showing the patterns 28 in planar view. The arrangement in the nested structure means arrangement in which the plural ridges 32 and grooves 34 having the same shape and different sizes are nested in an adjacent manner, which are centered on the common point.

The ridges 32 and the grooves 34 are respectively formed in an annular shape in planar view in the first embodiment. Accordingly, the flat surfaces 36 interposed between the ridges 32 and the grooves 34 are also formed in an annular shape. The annular shape is not limited to a circular shape, but is a concept including oval shapes (for example, an elliptical shape, an ovoid shape). The ridges 32 and the grooves 34 have the circular shape in Fig. 3 and Fig. 4.

As an example of arrangement in the nested structure, a plurality of ridges 32 and the grooves 34 extending along arcs which are concentrically disposed are arranged so as to be adjacent in the radial direction of the circle in this example. That is, a circular ridge 32 is surrounded by a circular groove 34 with a larger radius than the ridge 32, and the circular groove 34 is surrounded by another circular ridge 32 with a larger radius than the groove 34. Then, circular flat surfaces 36 are interposed between the ridges 32 and the grooves 34 adjacent to each other. In Fig. 3 and Fig. 4, the ridges 32 and the grooves 34 are both represented by circular lines. Specifically, ridge lines of the ridges 32 and valley lines of the grooves 34 are shown.

In this example, the ridges 32 and the grooves 34 are alternately arranged one by one as shown in Fig. 4. Accordingly, the groove 34 is provided on an outer circumference of the ridge 32 through the flat surface 36, and the ridge 32 is provided on an outer circumference of the groove 34 through the flat surface 36, which are sequentially repeated as shown in Fig. 5, thereby forming the circular pattern 28 shown in Fig. 4.

As shown in Fig. 3, the central point 38 is disposed at the intermediate position where the height HA of the pattern forming area 18 is divided into two, which corresponds to the position of the base semidiameter RS. The size of the ridge 32 or the groove 34 placed at the innermost position in the ridges 32 and the grooves 34 arranged in the nested structure is not particularly limited. For example, the size of the ridge 32 or the groove 34 placed at the inner most position on the ridge line or the valley line in the tire radial direction RD (a diameter in the case of the circular shape) is preferably 0.1 to 0.5 times of the height HA, and more preferably 0.1 to 0.3 times thereof.

The numbers of ridges 32 and the grooves 34 in each pattern 28 are not particularly limited, and the total number of ridges 32 and the grooves 34 may be 8 to 30, and may also be 10 to 20.

Respective dimensions of the pattern 28 shown in Fig. 4 may be set as follows in an example. The height HA of the pattern forming area 18 is 25 mm, the width W1 of the ridge 32 is 0.6 mm, the height H1 is 0.3 mm, the width W2 of the groove 34 is 0.6 mm, the depth H2 is 0.3 mm, the width W3 of the flat surface 36 is 0.3 mm, the diameter of the minimum ridge 32 on the ridge line is 2.5 mm, and the total number of the ridges 32 and the grooves 34 is 15.

According to the first embodiment, the pattern 28 is formed by including not only the ridges 32 but the ridges 32 and the grooves 34. Accordingly, the rubber amount can be equalized between the portion where the pattern 28 is provided and the portion where the pattern 28 is not provided. Specifically, the rubber amount for providing the ridges 32 can be compensated by portions for providing the grooves 34; therefore, the rubber amount can be equalized in the tire circumferential direction CD. Accordingly, it is possible to suppress occurrence of light spot (namely, hollow or underfill) in the ridges 32 at the time of vulcanization molding of the pneumatic tire 10.

As the ridges 32 and the grooves 34 are adjacent to each other through the flat surfaces 36, surfaces on which light is reflected are increased. Accordingly, light attenuation effects can be increased, which can make the patterns 28 look darker in appearance. Therefore, it is possible to further increase contrast between portions where the pattern 28 is not provided and which look light in appearance (for example, portions between the pattern 28 and the pattern 28, or the flat areas 22) and the patterns 28 which look dark.

As shown in Fig. 2, a band-shaped area 40 in which a plurality of ridges (second ridges) 42 extending in the tire radial direction RD are provided at equal intervals in the tire circumferential direction CD is provided at an outer side in the tire radial direction RD of the pattern forming areas 18 in the first embodiment. The plural ridges 42 are arranged at equal intervals of 0.3 mm to 1.0 mm in the tire circumferential direction CD according to an embodiment. The band-shaped area 40 may be provided at a part in the tire circumferential direction CD, but is provided over the entire circumference in the tire circumferential direction CD in this example. Accordingly, the band-shaped area 40 is formed in an annular shape adjacent to the outside of the decorative area 24 and surrounding the entire circumference thereof. A dimension HC (see Fig. 1) of the band-shaped area 40 in the tire radial direction RD is preferably 5 to 12 mm.

When the above band-shaped area 40 is provided, interface irregularities and light spot between members of the tread 12 and the sidewall 16 can be suppressed. Moreover, the black band-shaped area 40 is formed by light attenuation effects obtained by providing the ridges 42, which can emphasize the pattern forming area 18.

### [Second Embodiment]

Fig. 6 is a view showing a cross-sectional shape of the pattern 28 in a pneumatic tire according to a second embodiment. The second embodiment differs from the first embodiment in which the ridges 32 and the grooves 34 are alternately arranged one by one in a point that pairs of ridges 32 and pairs of grooves 34 are alternately arranged.

As shown in Fig. 6, two grooves 34, 34 are provided so as to be adjacent to each other around adjacent two ridges 32, 32 through the flat surface 36, and two ridges 32, 32 are provided so as to be adjacent to each other on an outer circumference of the grooves 34, 34 through the flat surface 36, which are sequentially repeated, thereby forming the circular pattern 28.

As described above, the ridges 32 and the grooves 34 may be provided alternately in units of plural numbers thereof, not limited to the case where the ridges 32 and the grooves 34 are provided alternately one by one. In the example shown in Fig. 6, the two ridges 32, 32 are adjacent to each other without providing the flat surface therebetween, and two grooves 34, 34 are also adjacent to each other without providing the flat surface therebetween; however, the flat surface may be interposed between the ridges 32, 32 as well as between the grooves 34, 34. The order of providing the ridges 32 and the grooves 34 is not particularly limited. For example, the pattern 28 in which the ridges 32 and the grooves 34 are provided alternately one by one and the pattern 28 in which ridges 32 and the grooves 34 are provided alternately in units of plural numbers thereof can be mixed. Other structures and advantages of the second embodiment are the same as those of the first embodiment, and explanation thereof is omitted.

### [Third Embodiment]

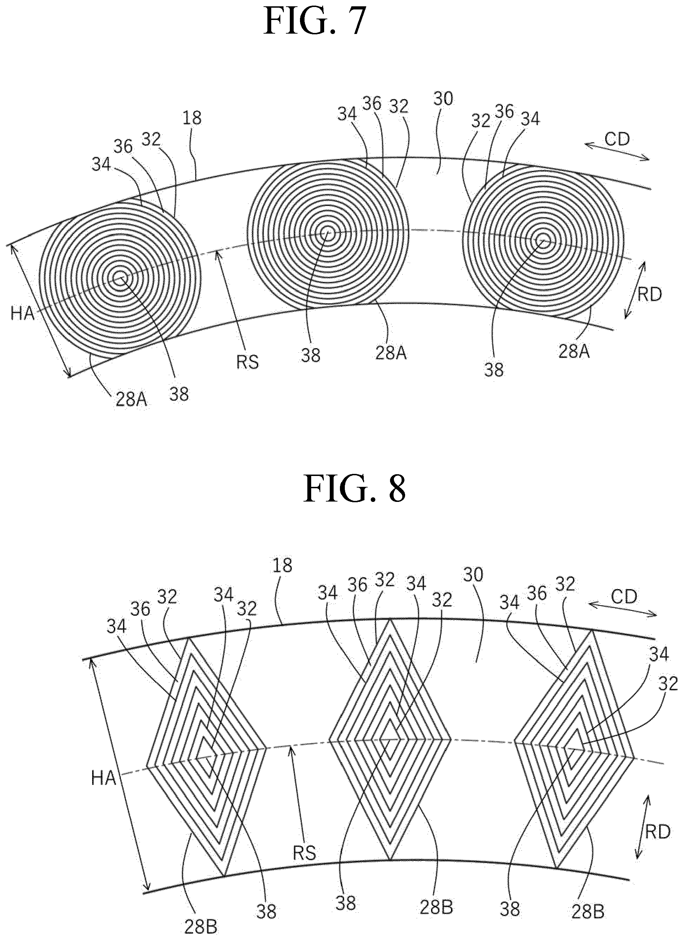

Fig. 7 is a view showing the pattern forming area 18 in a pneumatic tire according to a third embodiment in an enlarged manner. The third embodiment is the same as the first embodiment in a point that each of patterns 28A provided in the pattern forming area 18 is formed by including a plurality of ridges 32 and grooves 34 which are concentrically disposed. However, the ridges 32 and the grooves 34 placed at peripheral edge parts of the pattern 28A do not have a perfect circle shape, but have a shape in which a circle is cut off on both sides in the tire radial direction RD, which differs from the first embodiment in this point.

In the case where the ridges 32 and the grooves 34 are arranged in the nested structure as described above, it is not always necessary that the groove 34 is surrounded by the ridge 32, or the ridge 32 is surrounded by the groove 34 over the entire circumference, but it is possible that the ridges 32 and the grooves 34 are nested so as to be adjacent to each other in arcs, part of an oval shape, and part of a polygon. Other structures and advantages of the third embodiment are the same as those of the first embodiment, and explanation thereof is omitted.

### [Fourth Embodiment]

Fig. 8 is a view showing the pattern forming area 18 in a pneumatic tire according to a fourth embodiment in an enlarged manner. The fourth embodiment differs from the first embodiment in a point that each of patterns 28B formed in the pattern forming area 18 is formed by including ridges 32 and the grooves 34 having a rhomboid shape in planar view.

In the fourth embodiment, the plural ridges 32 and the grooves 34 which are similar figures of the rhomboid shape are arranged to be nested with the central point 38 set in common so that the ridges 32 and the grooves 34 are adjacent to each other. Specifically, the ridge 32 with the rhomboid shape is surrounded by the groove 34 with the rhomboid shape larger than the above, and the groove 34 with the rhomboid shape is surrounded by the ridge 32 with the rhomboid shape further larger than the above. In Fig. 8, ridge lines of the ridges 32 and valley lines of the grooves 34 are shown.

The ridges 32 and the grooves 34 are alternately arranged. The groove 34 is provided around the ridge 32 through the flat surface 36, and the ridge 32 is provided around the groove 34 through the flat surface 36, which are sequentially repeated, thereby forming the circular patterns 28B having the rhomboid shape shown in Fig. 8.

Respective dimensions of the pattern 28B shown in Fig. 8 may be set as follows in the embodiment. The height HA of the pattern forming area 18 is 25 mm, the width W1 of the ridge 32 is 0.6 mm, the height H1 is 0.3 mm, the width W2 of the groove 34 is 0.6 mm, the depth H2 is 0.3 mm, the width W3 of the flat surface 36 is 0.3 mm, the size of the minimum ridge 32 on the ridge line in the tire radial direction is 5 mm, and the total number of the ridges 32 and the grooves 34 is 7.

In the case where the ridges 32 and the grooves 34 are arranged in the nested structure as described above, the shape thereof in the planar view is not limited to the annular shape but may be polygonal shapes. That is, for example, a plurality of ridges 32 and grooves 34 of large and small sizes which have similar shapes in planar view may be arranged to be nested with the central point set in common so that the ridges 32 and the grooves 34 are adjacent to each other. The shape of the ridges 32 and the grooves 34 is not limited to a closed curve. For example, the ridges 32 and the grooves 34 wound in a spiral shape centered on a common point are arranged so that one spiral is nested along the other spiral to thereby make the ridges 32 and the grooves 34 adjacent at respective parts of the spirals.

Other structures and advantages of the fourth embodiment are the same as those of the first embodiment, and explanation thereof is omitted.

### [Other Embodiments]

Although the ridges 32 and the grooves 34 have the triangular shape in cross section in the above embodiments, the cross-sectional shape of the ridges 32 and the grooves 34 is not limited to this, and various cross-sectional shapes can be adopted. It is not necessary that the ridge 32 and the groove 34 have the same cross-sectional shape, but may have cross-sectional shapes different from each other.

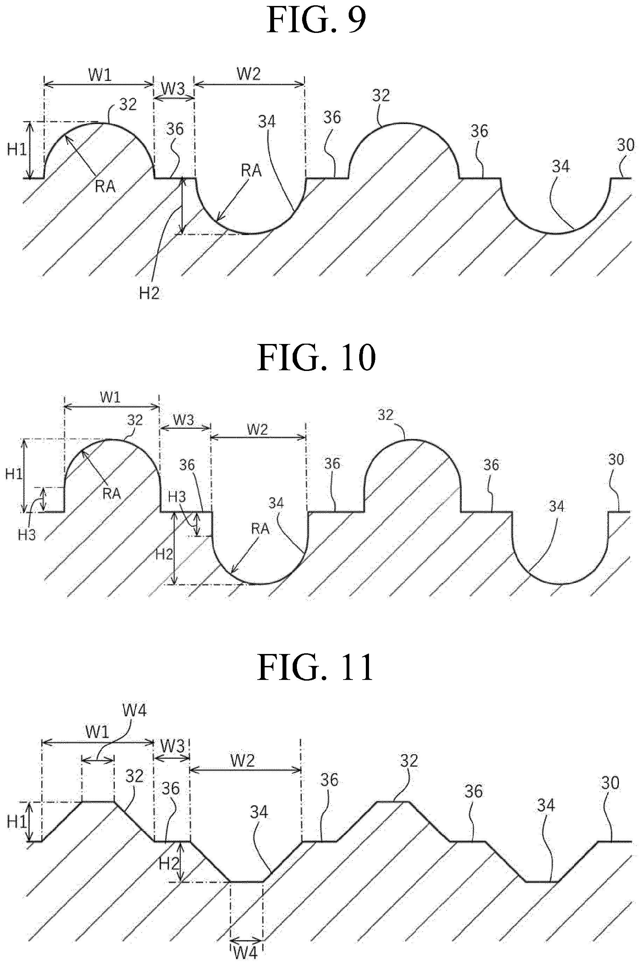

Fig. 9 is a cross-sectional view showing a cross-sectional shape according to a first modification example. The ridges 32 and the grooves 34 have a semicircular shape in cross section in the first modification example. In this case, a curvature radius RA of the semicircle is not particularly limited, and for example, may be 0.1 to 0.5 mm.

Fig. 10 is a cross-sectional view showing a cross-sectional shape according to a second modification example. The ridges 32 and the grooves 34 have a cross-sectional shape in which semicircle is raised by a rectangle in the second modification example. In this case, a curvature radius RA of the semicircle is not particularly limited, and for example, may be 0.1 mm or more and 0.5 times or less of W1 and 0.5 times or less of W2. A raised amount H3 by the rectangle is preferably a value obtained by subtracting the curvature radius RA from the height H1 of the ridge 32 or the depth H2 of the groove 34.

Fig. 11 is a cross-sectional view showing a cross-sectional shape according to a third modification example. The ridges 32 and the grooves 34 have a trapezoidal shape in cross section in the third modification example, and an example of an isosceles trapezoid is shown. In this case, a dimension W4 of a base of the trapezoid corresponding to a top face of the ridge 32 and a bottom face of the groove 34 is preferably 0.2 to 0.5 times of the width W1 of the ridge 32 and the width W2 of the groove 34 respectively.

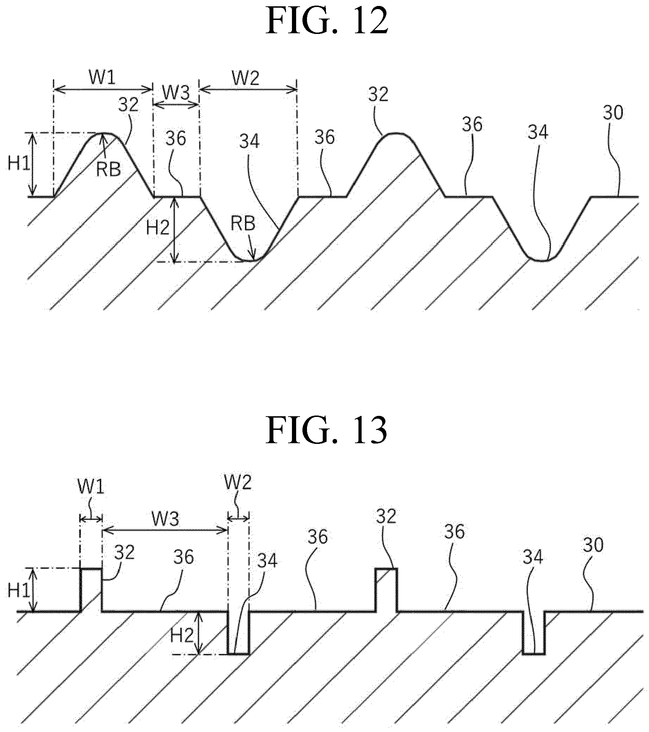

Fig. 12 is a cross-sectional view showing a cross-sectional shape according to a fourth modification example. The ridges 32 and the grooves 34 have a cross-sectional shape in which an apex of a triangle is rounded by an arc in the fourth modification example. In this case, a curvature radius RB of the arc is not particularly limited, and for example, may be 0.1 mm or more to 0.5 times or less of W1 or 0.5 times or less of W2.

Fig. 13 is a cross-sectional view showing a cross-sectional shape according to a fifth modification example. The ridges 32 and the grooves 34 have a rectangular shape in cross section in the fifth modification example.

In the modification examples shown in Fig. 9 to Fig. 13, the width W1 and the height H1 of the ridge 32 and the width W2 and the depth H2 of the groove 34 are the same as those in the first embodiment.

The ridges 32 and the grooves 34 are arranged in the nested structure in the above embodiments; however, the arrangement configuration of the ridges 32 and the grooves 34 is not limited to this, and various arrangement configurations can be adopted.

For example, straight-line shaped or curved shaped ridges and grooves may be arranged alternately one by one or in units of plural numbers thereof. As an example, ridges and grooves in the straight-line shape or the curved shape parallel to one another extending in parallel to or inclined to the tire radial direction RD may be arranged alternately in the tire circumferential direction CD so as to be adjacent to one another through the flat surfaces. As another example, the ridges and the grooves parallel to one another extending in the tire circumferential direction CD may be arranged alternately in the tire radial direction RD so as to be adjacent to one another through the flat surfaces.

The pattern forming area 18 is provided separately from the marking area 20 in the above embodiments; however, the marking 26 may be provided within the pattern forming area 18. That is, for example, a pattern 28 in which a plurality of ridges 32 and grooves 34 are arranged so as to be adjacent to each other through the flat surfaces 36 is formed, and the marking 26 having a flat surface can be provided to be placed within the pattern 28.

Respective configurations of the above embodiments may be suitably combined, and for example, the cross-sectional shape of the pattern 28 according to the second embodiment shown in Fig. 6 can be applied to the pattern 28A according to the third embodiment shown in Fig. 7 or the pattern 28B according to the fourth embodiment shown in Fig. 8.

The type of the pneumatic tire according to the embodiments is not particularly limited, and the pneumatic tire can be used for various tires including tires for passenger cars and tires for heavy loads such as trucks and buses.

The respective dimensions in the specification are values in an unloaded normal state where the pneumatic tire is fitted to a normal rim and is filled with a normal internal pressure. Examples of the normal rim include the "standard rim" in the JATMA standard, and the "Measuring Rim" in the TRA standard and in the ETRTO standard. Examples of the normal internal pressure include the "maximum air pressure" in the JATMA standard, the "maximum value" described in "TIRE LOAD LIMITS AT VARIOUS COLD INFLATION PRESSURES" in the TRA standard, and "INFLATION PRESSURE" in the ETRTO standard. However, the normal internal pressure is normally set to 180 kPa in the case of the tire for the passenger car, and set to 220 kPa in the case of a tire on which "Extra Load" or "Reinforced" is written.

Concerning a range of various numerical values described in the specification, an upper limit value and a lower limit value can be arbitrarily combined respectively, and all combinations are described as a preferable range of numerical values in the specification. The description of the range of numerical values "X to Y" means X or more to Y or less.

Some embodiments of the present invention have been explained above. These embodiments are cited as examples and do not intend to limit the scope of the invention. Reference Signs List
- 10:: pneumatic tire
- 16:: sidewall
- 18:: pattern forming area
- 28, 28A, 28B:: pattern
- 30:: reference surface
- 32:: ridge
- 34:: groove
- 36:: flat surface
- 38:: central point
- 40:: band-shaped area
- 42:: ridge (second ridge)

## Claims

1. A pneumatic tire (10) comprising:
a pattern (28, 28a, 28b) in a pattern forming area (18) provided on a surface of a sidewall (16),
wherein the pattern (28, 28a, 28b) includes ridges (32) protruding from a reference surface (30) in the pattern forming area (18), grooves (34) recessed from the reference surface (30), and flat surfaces (36) interposed between adjacent ridges (32) and grooves (34) and extending along the reference surface (30), **characterized in that**
the ridges (32) and the grooves (34) are arranged in a nested structure having a common central point (38).

2. The pneumatic tire (10) according to claim 1,
wherein a plurality of the ridges (32) and the grooves (34) having similar shapes and different sizes in planar view are arranged to be nested with the central point (38) set in common so as to be adjacent to each other through the flat surfaces (36).

3. The pneumatic tire (10) according to any one of claims 1 to 2,
wherein the ridges (32) and the grooves (34) are formed in an annular shape in planar view.

4. The pneumatic tire (10) according to any one of claims 1 to 2,
wherein the ridges (32) and the grooves (34) are formed in a polygonal shape.

5. The pneumatic tire (10) according to any one of claims 1 to 4,
wherein the ridges (32) and the grooves (34) are arranged alternately one by one, or in units of plural numbers thereof.

6. The pneumatic tire (10) according to any one of claims 1 to 5,
wherein a width (W1) of the ridge (32) is 0.1 to 1 mm, a height (H1) of the ridge (32) is 0.1 to 0.8 mm, a width (W2) of the groove (34) is 0.1 to 1 mm, a depth (H2) of the groove (34) is 0.1 to 0.8 mm, and a width (W3) of the flat surface (36) is 0. 1 to 2 mm.

7. The pneumatic tire (10) according to any one of claims 1 to 6,
wherein cross-sectional shapes of the ridge (32) and the groove (34) include a triangular shape, a semicircular shape, a shape in which a semicircle is raised by a rectangle, a trapezoidal shape, a shape in which an apex of a triangle is rounded by an arc, and a rectangular shape.

8. The pneumatic tire (10) according to any one of claims 1 to 7,
wherein an area (40) where a plurality of second ridges (42) extending in a tire radial direction (RD) are arranged at equal intervals in a tire circumferential direction (CD) is provided at an outer side in the tire radial direction (RD) of the pattern forming area (18), in which a dimension (HC) of the area (40) in the tire radial direction (RD) is 5 mm or more to 12 mm or less.

## Patentansprüche

1. Pneumatischer Reifen (10), welcher aufweist:
ein Muster (28, 28a, 28b) in einem musterbildenden Bereich (18), der auf einer Oberfläche einer Seitenwand (16) vorgesehen ist,
wobei das Muster (28, 28a, 28b) Rippen (32), die von einer Bezugsfläche (30) in dem musterbildenden Bereich (18) vorstehen, Rillen (34), die von der Bezugsfläche (30) vertieft sind, und flache Oberflächen (36) enthält, die zwischen benachbarten Rippen (32) und Rillen (34) angeordnet sind und die sich entlang der Bezugsfläche (30) erstrecken, **dadurch gekennzeichnet, dass**
die Rippen (32) und die Rillen (34) in einer verschachtelten Struktur mit einem gemeinsamen zentralen Punkt (38) angeordnet sind.

2. Pneumatischer Reifen (10) nach Anspruch 1,
wobei eine Vielzahl der Rippen (32) und der Rillen (34), die in einer Draufsicht ähnliche Formen und unterschiedliche Größen haben, so angeordnet sind, dass sie mit dem gemeinsamen zentralen Punkt (38) auf eine solche Weise verschachtelt sind, dass sie durch die flachen Oberflächen (36) aneinander angrenzen.

3. Pneumatischer Reifen (10) nach einem der Ansprüche 1 bis 2,
wobei die Rippen (32) und die Rillen (34) in der Draufsicht ringförmig ausgebildet sind.

4. Pneumatischer Reifen (10) nach einem der Ansprüche 1 bis 2,
wobei die Rippen (32) und die Rillen (34) in einer polygonalen Form ausgebildet sind.

5. Pneumatischer Reifen (10) nach einem der Ansprüche 1 bis 4,
wobei die Rippen (32) und die Rillen (34) abwechselnd einzeln oder in Einheiten mit einer Vielzahl davon angeordnet sind.

6. Pneumatischer Reifen (10) nach einem der Ansprüche 1 bis 5,
wobei eine Breite (W1) der Rippe (32) 0,1 bis 1 mm, eine Höhe (H1) der Rippe (32) 0,1 bis 0,8 mm, eine Breite (W2) der Rille (34) 0,1 bis 1 mm, eine Tiefe (H2) der Rille (34) 0,1 bis 0,8 mm und eine Breite (W3) der flachen Oberfläche (36) 0,1 bis 2 mm beträgt.

7. Pneumatischer Reifen (10) nach einem der Ansprüche 1 bis 6,
wobei Querschnittsformen der Rippe (32) und der Rille (34) eine dreieckige Form, eine halbkreisförmige Form, eine Form, bei der ein Halbkreis durch ein Rechteck erhöht ist, eine trapezförmige Form, eine Form, bei der ein Scheitelpunkt eines Dreiecks durch einen Bogen abgerundet ist, und eine rechteckige Form enthalten.

8. Pneumatischer Reifen (10) nach einem der Ansprüche 1 bis 7,
wobei ein Bereich (40), bei dem eine Vielzahl an zweiten Rippen (42), die sich in einer Radialrichtung (RD) des Reifens erstrecken und die in gleichen Abständen in einer Umfangsrichtung (CD) des Reifens angeordnet sind, an einer äußeren Seite in der Radialrichtung (RD) des musterbildenden Bereichs (18) vorgesehen ist, wobei eine Abmessung (HC) des Bereichs (40) in der Radialrichtung (RD) des Reifens 5 mm oder mehr bis 12 mm oder weniger beträgt.

## Revendications

1. Pneumatique (10) comprenant :
un motif (28, 28a, 28b) dans une zone de formation de motif (18) disposée sur une surface d'une paroi latérale (16),
dans lequel le motif (28, 28a, 28b) inclut des arêtes (32) faisant saillie à partir d'une surface de référence (30) dans la zone de formation de motif (18), des rainures (34) évidées à partir de la surface de référence (30), et des surfaces plates (36) interposées entre des arêtes (32) et rainures (34) adjacentes et
s'étendant le long de la surface de référence (30), **caractérisé en ce que** les arêtes (32) et les rainures (34) sont agencées dans une structure emboîtée présentant un point central commun (38).

2. Pneumatique (10) selon la revendication 1,
dans lequel une pluralité des arêtes (32) et des rainures (34) présentant des formes similaires et différentes tailles dans une vue en plan sont agencées pour être emboîtées avec le point central (38) défini en commun de manière à être adjacentes les unes aux autres à travers les surfaces plates (36).

3. Pneumatique (10) selon l'une quelconque des revendications 1 à 2,
dans lequel les arêtes (32) et les rainures (34) sont formées sous une forme annulaire dans une vue en plan.

4. Pneumatique (10) selon l'une quelconque des revendications 1 à 2,
dans lequel les arêtes (32) et les rainures (34) sont formées sous une forme polygonale.

5. Pneumatique (10) selon l'une quelconque des revendications 1 à 4,
dans lequel les arêtes (32) et les rainures (34) sont agencées en alternance une par une, ou en unités de plusieurs nombres de celles-ci.

6. Pneumatique (10) selon l'une quelconque des revendications 1 à 5,
dans lequel une largeur (W1) de l'arête (32) est de 0,1 à 1 mm, une hauteur (H1) de l'arête (32) est de 0,1 à 0,8 mm, une largeur (W2) de la rainure (34) est de 0,1 à 1 mm, une profondeur (H2) de la rainure (34) est de 0,1 à 0,8 mm, et une largeur (W3) de la surface plate (36) est de 0,1 à 2 mm.

7. Pneumatique (10) selon l'une quelconque des revendications 1 à 6,
dans lequel des formes transversales de l'arête (32) et de la rainure (34) incluent une forme triangulaire, une forme semicirculaire, une forme dans laquelle un demi-cercle est élevé par un rectangle, une forme trapézoïdale, une forme dans laquelle un sommet d'un triangle est arrondi par un arc, et une forme rectangulaire.

8. Pneumatique (10) selon l'une quelconque des revendications 1 à 7,
dans lequel une zone (40) où une pluralité de secondes arêtes (42) s'étendant dans une direction radiale de pneu (RD) sont agencées à intervalles égaux dans une direction circonférentielle de pneu (CD) est disposée au niveau d'un côté externe dans la direction radiale de pneu (RD) de la zone de formation de motif (18), dans laquelle une dimension (HC) de la zone (40) dans la direction radiale de pneu (RD) est de 5 mm ou plus à 12 mm ou moins.
